# EUROPÄISCHE PATENTSCHRIFT

(11) **EP 2 984 538 B1**
(45) Veröffentlichungstag und Bekanntmachung des Hinweises auf die Patenterteilung: **12.06.2019**
(21) Anmeldenummer: 14718507.8
(22) Anmeldetag: 04.04.2014
(51) Int. Cl.: G06F 3/01, G06F 3/0488, G01C 21/36, G06F 3/0482

(54) **VERFAHREN UND SYSTEM ZUR ÜBERMITTLUNG EINER BEDIENUNGSSPEZIFISCHEN RÜCKMELDUNG AN EINEN NUTZER BEI BEDIENUNG MINDESTENS EINER BERÜHRUNGSSENSITIVEN EINRICHTUNG**
METHOD AND SYSTEM FOR TRANSMITTING OPERATION-SPECIFIC FEEDBACK TO A USER UPON OPERATION OF AT LEAST ONE TOUCH-SENSITIVE DEVICE
PROCÉDÉ ET SYSTÈME POUR TRANSMETTRE DES INFORMATIONS DE RETOUR SPÉCIFIQUES À LA COMMANDE À UN UTILISATEUR LORS DE LA COMMANDE D'AU MOINS UN DISPOSITIF SENSIBLE À L'EFFLEUREMENT

(30) Priorität: 08.04.2013 DE 102013006027
(43) Veröffentlichungstag der Anmeldung: 17.02.2016
(73) Patentinhaber: Audi AG, 85045 Ingolstadt (DE)
(72) Erfinder: ANGELESCU, Emanuel, 50858 Köln (DE)
(86) Internationale Anmeldenummer: PCT/EP2014/000900
(87) Internationale Veröffentlichungsnummer: WO 2014/166612

(56) Entgegenhaltungen:
- WO-A1-2007/128633
- DE-A1-102004 040 886
- DE-A1-102006 047 893
- US-A1- 2009 167 508
- US-A1- 2009 295 739
- US-A1- 2012 326 982

## Beschreibung

Die vorliegende Erfindung betrifft ein Verfahren und ein zugehöriges System zur Übermittlung einer bedienungsspezifischen Rückmeldung an einen Nutzer, insbesondere einen Fahrer eines Fahrzeugs, ohne diesen visuell abzulenken.

Durch den Einsatz von Bildschirmen in Fahrzeugen ist es möglich, eine Vielzahl an Informationen an einen Nutzer, insbesondere einen Fahrer eines Fahrzeugs zu übermitteln. Dabei kann eine übermittelte Informationsmenge, insbesondere wenn diese interaktiv gestaltet ist, den Nutzer schnell überfordern und zu einer Gefährdung im Straßenverkehr beitragen.

Eine Möglichkeit den Nutzer, insbesondere den Fahrer eines Fahrzeugs zu entlasten, ist ein Einsatz von Systemen, welche eine an den Nutzer zu übermittelnde Information polymodal, d. h. durch mehrere Kommunikationskanäle darstellen. Dabei sind für eine Kommunikation mit dem Nutzer neben visuellen Systemen, besonders auditive und haptische Systeme öder eine Kombination aus diesen geeignet.

In der DE 101 44 329 A1 ist ein Verfahren zum Bewegen eines Cursors auf einem berührungssensitiven Bildschirm offenbart. Dabei soll das Verfahren auch unter erschwerten Bedingungen ein sicheres und zielgenaues Bewegen/Positionieren eines Mauszeigers (Cursors) auf einem Bildschirm, welcher in Funktionszonen und Betätigungsfelder unterteilt ist, ermöglichen. Dafür ist in einer bevorzugten Ausführungsform des Verfahrens vorgesehen, einem Bediener anstelle oder zusätzlich zu einer akustischen Rückmeldung, eine mechanische Rückmeldung zu geben. Die mechanische Rückmeldung erfolgt dabei in Form eines Vibrierens der Bedienfläche.

Schließlich ist in der DE 10 2007 005 889 A1 eine Bedieneinheit für ein Fahrzeug offenbart, welche eine Anzeigeeinrichtung und eine sich mit der Anzeigeeinrichtung wenigstens teilweise überlagernde berührungssensitive Eingabeeinrichtung mit einer Bedienfläche umfasst, wobei die Oberfläche der Bedienfläche durch wenigstens einen Aktuator veränderbar ist. Durch die Veränderung der Oberfläche der Bedienfläche soll es einem Nutzer ermöglicht werden, schon vor der Eingabe den berührungssensitiven Bereich der Bedienfläche zu ertasten, statt ihn mit den Augen zu suchen. Eine notwendige Aufmerksamkeitsleistung des Nutzers kann dabei z. B. dadurch noch weiter reduziert werden, dass die verschiedenen Eingabeelemente durch einen Aktuator in verschiedenen Formen dargestellt werden.

Weiterhin offenbart die Druckschrift WO 2007/128633 A1 eine Fahrzeugfunktionssteuerung und ein Eingabeverfahren für eine Fahrzeugfunktionssteuerung, insbesondere zur Steuerung individuell einstellbarer Komponenten, wie bspw. Komfortfunktionen eines Fahrzeugs.

In der deutschen Offenlegungsschrift DE 10 2004 040 886 A1 wird eine Bedienvorrichtung zur Bedienung einer Recheneinheit in einem Fahrzeug vorgestellt, wobei die Bedienvorrichtung einen mittels eines Aktors beweglichen Touchscreen umfasst.

Die US-amerikanische Druckschrift US 2009/0295739 A1 offenbart eine Benutzerschnittstelle mit einem haptischen Feedback zur Orientierung eines Nutzers auf der Benutzerschnittstelle.

Eine Eingabevorrichtung ist in der deutschen Offenlegungsschrift DE 10 2006 047 893 A1 offenbart, wobei die Eingabevorrichtung einen Aktor zum Bewegen eines Touchscreens umfasst.

Die US-amerikanische Druckschrift US 2012/326982 A1 offenbart eine tragbare elektronische Vorrichtung mit einem Bildschirm zur Anzeige einer grafischen Benutzeroberfläche und einer separat vom Bildschirm angeordneten berührungssensitiven Einrichtung, die es einem Nutzer ermöglicht durch Bewegen eines Fingers auf der berührungssensitiven Einrichtung einen auf dem Bildschirm angezeigten Cursors zu verfahren und auf diese Weise mit der grafischen Benutzeroberfläche zu interagieren. Bewegt der Nutzer den Cursor über die grafische Benutzeroberfläche, so wird abhängig von der jeweiligen Position des Cursors und der damit verbundenen Information der grafischen Benutzeroberfläche über die berührungssensitive Einrichtung eine Vibration mit einem ortsspezifischen Vibrationsmuster, das je nach Ort bzw. der am jeweiligen Ort dargestellten Information, in Stärke, Dauer und Frequenz variieren kann. Vorteilhaft kann die durch die Vibration übermittelte haptische Rückmeldung auch durch eine entsprechende akustische Rückmeldung ergänzt werden. Des Weiteren ist vorgesehen, die grafische Benutzeroberfläche in bandförmige Regionen zu unterteilen, die z.B. jeweils ein Objekt der grafischen Benutzeroberfläche enthalten, wobei jede der Regionen mit einem imaginären Band, das eine Quer- und eine Längsausdehnung aufweist, assoziiert ist. Beim Verfahren des Cursors innerhalb eines Bandes entlang dessen Querausdehnung, nimmt die Intensität der Vibration vom Rand des Bandes graduell bis zum Zentrum des Bandes zu bzw. vom Zentrum bis zum Rand wieder ab, wohingegen die der jeweiligen Position in Querrichtung entsprechende Intensität der Vibration beim Verfahren des Cursor entlang der Längsausdehnung des Bandes nicht variiert.

Weiterhin offenbart die US-amerikanische Druckschrift US 2009/167508 A1 eine tragbare elektronische Vorrichtung mit einem berührungssensitiven Bildschirm zur Anzeige einer grafischen Benutzeroberfläche mit einer Mehrzahl von Objekten wie z.B. Tasten einer virtuellen Tastatur. Für ein spezielles Objekt aus der Mehrzahl der angezeigten Objekte, z.B. eine ganz bestimmte Taste der virtuellen Tastatur, wird eine haptische Rückmeldung in Form einer Vibration ausgegeben, wobei die Stärke der Vibration graduell zunimmt je näher sich ein mit dem Bildschirm in Kontakt befindlicher Finger eines Nutzers diesem Objekt nähert.

Es ist eine Aufgabe des erfindungsgemäßen Verfahrens bzw. des erfindungsgemäßen Systems, einen jeweiligen Nutzer komfortabel und effizient mit Informationen zu versorgen, ohne dabei die Aufmerksamkeit des Nutzers allzu sehr zu beanspruchen.

Diese Aufgabe wird erfindungsgemäß durch ein Verfahren mit den Merkmalen des unabhängigen Patentanspruchs 1 und ein System mit den Merkmalen des unabhängigen Patentanspruchs 7 gelöst. Weitere Vorteile und Ausgestaltungen der Erfindung ergeben sich aus der Beschreibung und der beiliegenden Zeichnung sowie den jeweiligen Unteransprüchen.

Erfindungsgemäß ist dabei ein Verfahren zur Übermittlung einer bedienungsspezifischen Rückmeldung an einen Nutzer bei Bedienung mindestens einer berührungssensitiven Einrichtung gemäß des unabhängigen Patentanspruchs 1 vorgesehen. Ein Nutzer eines technischen Systems, insbesondere ein Fahrer eines Fahrzeugs ist bei einer Überwachung des technischen Systems, insbesondere des Fahrzeugs als auch des Straßenverkehrs, in den er involviert ist, vorwiegend auf visuelle Informationen angewiesen.

Weiterhin sind moderne Fahrzeuge zunehmend mit Mitteln zur Übermittlung komplexer Informationen an jeweilige Nutzer ausgestattet. Um eine Überforderung des Nutzers bei einer Integration dieser verschiedenen Informationen zu vermeiden bzw. diesen zu entlasten, sieht das erfindungsgemäße Verfahren eine Kommunikation zwischen dem technischen System des jeweiligen Fahrzeugs und dem Nutzer durch Verwendung zusätzlicher Kommunikationskanäle vor. Dazu wird erfindungsgemäß eine visuelle Information, welche an den Nutzer des jeweiligen Fahrzeugs übermittelt werden soll, zusätzlich durch haptische und/oder akustische Signale dargeboten.

Unter Information ist im Kontext des erfindungsgemäßen Verfahrens bzw. Systems jede Form an für den Nutzer relevantem Datenmaterial zu verstehen. Im Zusammenhang mit einem Fahrzeug sind dies insbesondere Daten der Navigation, der Unterhaltungselektronik sowie der Fahrzeugüberwachung.

Erfindungsgemäß ermöglicht diese zusätzliche Darbietung dem Nutzer eine teilweise oder sogar vollständige Blindbedienung des technischen Systems. Dabei ist vorgesehen, dass die an den Nutzer zu übermittelnden Informationen in der Regel auf mindestens einer bildgebenden Einheit unterstützt von mindestens einer berührungssensitiven Einrichtung dargestellt werden, welche durch Verwendung geeigneter Aktuatoren und/oder Vibratoren, für den Nutzer relevante Informationen in Form haptischer Muster darbietet. Diese haptischen Muster können insbesondere räumliche Hervorhebungen und/oder Vibrationen in charakteristischen Frequenzen bzw. Frequenzmustern sein, welche sich in Stärke und Dauer unterscheiden.

Unter einer berührungssensitiven Einrichtung ist im Kontext der vorliegenden Erfindung eine Vorrichtung zu verstehen, die Berührungen eines jeweiligen Nutzers erfasst und diese in Lageinformationen innerhalb einer auf einer bildgebenden Einheit dargestellten virtuellen Umgebung umwandelt. Derartige Vorrichtungen sind auch unter der Bezeichnung "Touchpad" bekannt, wobei allerdings ein herkömmliches "Touchpad" im Gegensatz zu der erfindungsgemäßen berührungssensitiven Einrichtung nicht dazu ausgelegt ist, eine Rückmeldung in Form haptischer und/oder akustischer Muster zu geben.

Gemäß einem Ausführungsbeispiel des Verfahrens, das nicht Bestandteil der Erfindung ist, ist die berührungssensitive Einrichtung in transparenter Ausgestaltung auf einer bildgebenden Einheit aufgesetzt oder in diese integriert, wie dies bei einem Touchscreen der Fall ist. Allerdings hat die berührungssensitive Einrichtung erfindungsgemäß hierbei noch eine gegenüber dem herkömmlichen Touchscreen bzw. Touchpad zusätzliche Funktion, nämlich die der Abgabe einer Rückmeldung mittels haptischer und/oder akustischer Muster. Erfindungsgemäß ist die berührungssensitive Einrichtung jedoch in räumlicher Distanz zu der bildgebenden Einheit angeordnet.

Gemäß einer weiteren Ausgestaltung des erfindungsgemäßen Verfahrens ist vorgesehen, Informationen wie bspw. Listen oder Listeneinträge einer auf einer bildgebenden Einheit gezeigten Liste, einem charakteristischen haptischen und/oder akustischen Muster zuzuordnen, welches von dem technischen System vorgegeben oder vom Nutzer frei gewählt werden kann. Durch diese Zuordnung von haptischen und/oder akustischen Mustern zu einer Information, kann diese vom Nutzer auch ohne visuelle Kontrolle wahrgenommen und identifiziert werden.

Ferner sieht das erfindungsgemäße Verfahren in einer weiteren möglichen Ausgestaltung auch eine Zuordnung von haptischen und/oder akustischen Mustern als direkte Rückmeldung für vom Nutzer getätigte Eingaben vor.

Die haptischen und/oder akustischen Muster, welche einer für den Nutzer relevanten Information und/oder einer Eingabe durch den Nutzer zugeordnet werden können, sind durch akustische Signale ergänzbar oder ersetzbar. Durch Kombination von haptischer und akustischer Information steht dem erfindungsgemäßen System eine signifikante Menge an charakteristischen Signalmustern zur Verfügung, welche von dem jeweiligen Nutzer intuitiv, einfach und schnell wahrgenommen und identifiziert werden können. Insbesondere bei einer Rückmeldefunktion, welche dann auftritt, wenn ein Signal als Bestätigung für eine Verarbeitung einer Nutzereingabe ausgegeben werden soll, sind Vibrationsmuster vorteilhaft, da diese diskret und schnell wiederzugeben sind. Daher kann die Rückmeldung spezifisch nur für den Nutzer merkbar ausgegeben werden, und es werden nicht, wie bspw. bei der Rückmeldung mittels Tönen der Fall, etwaige Mitfahrer belästigt.

Ferner sieht das erfindungsgemäße Verfahren auch vor, dass durch Variation in Stärke, Dauer und Frequenz der haptischen und/oder akustischen Muster, bei Bedienung der mindestens einen berührungssensitiven Einrichtung angesprochene, je mit einer Information verbundene und auf der mindestens einen bildgebenden Einheit dargestellte Stellen an den Nutzer identifizier- und unterscheidbar rückgemeldet werden.

Durch eine Zuordnung eines charakteristischen Signalmusters, welches haptischer und/oder akustischer Natur sein kann, zu einer für den jeweiligen Nutzer relevanten Information, wie bspw. ein kurzes Klicken, das mit einer kurzen Vibration verbunden ist, zu einer Auswahl eines Listenelements durch den Nutzer, kann der Nutzer die auf der bildgebenden Einheit bzw. innerhalb des erfindungsgemäß bereitzustellenden Systems ablaufenden Prozesse auch ohne visuelle Kontrolle nachverfolgen. Dabei ist es dem Nutzer möglich, zwischen verschiedenen Prozessen zu unterscheiden, da diese durch unterschiedliche Signalmuster repräsentiert werden.

In einer weiteren möglichen Ausgestaltung des erfindungsgemäßen Verfahrens ist vorgesehen, dass die bei Bedienung der mindestens einen berührungssensitiven Einrichtung angesprochenen, je mit einer Information verbundenen und auf der mindestens einen bildgebenden Einheit dargestellten Stellen ausgewählt sind aus der Gruppe bestehend aus Listenelementen einer auf der bildgebenden Einheit gezeigten Liste, Points of Interest in einer auf der bildgebenden Einheit dargestellten Navigationskarte, Straßen und/oder Geländemerkmale eines auf der bildgebenden Einheit dargestellten Geländemodells.

Im Kontext der Anwendung des erfindungsgemäßen Verfahrens im Straßenverkehr, insbesondere zu Navigationszwecken, ist vorgesehen, dass bspw. Straßen, Points of Interest oder Merkmale eines Geländemodells haptisch wahrgenommen werden können. Durch Übermittlung der jeweiligen Information auf haptischem und/oder akustischem Wege, ist es dem Nutzer bzw. Fahrer möglich, eine Eingabe vorzunehmen ohne seine visuelle Aufmerksamkeit für den Verkehr einzuschränken. Beispielsweise können Autobahnen und Landstraßen durch die Intensität der haptischen und/oder akustischen Rückmeldung des technischen Systems vom Nutzer bzw. Fahrer unterschieden und dadurch gezielt ausgewählt werden.

In einer weiteren möglichen Ausführungsform des erfindungsgemäßen Verfahrens ist vorgesehen, dass durch Variation und Kombination von Stärke, Dauer und Frequenz der haptischen und/oder akustischen Muster, eine Vielzahl an von dem jeweiligen Nutzer leicht zu unterscheidenden Mustern bereitgestellt wird, welche einer Vielzahl an auf der mindestens einen bildgebenden Einheit dargestellten, je mit einer Information verbundenen Stellen zugeordnet werden können:

Es ist erforderlich, insbesondere bei Bedienung eines technischen Systems ohne visuelle Kontrolle, dem jeweiligen Nutzer eine fortlaufende Rückmeldung über getätigte Eingaben zu übermitteln. Daher sieht das erfindungsgemäße Verfahren vor, eine Berührung einer berührungssensitiven Einrichtung durch den jeweiligen Nutzer, in Form von haptischen und/oder akustischen Mustern an den jeweiligen Nutzer rückzumelden. Dabei kann die haptische und/oder akustische Rückmeldung auch derart ausgeprägt sein, dass diese dem Nutzer Signale zur Orientierung auf der berührungssensitiven Einrichtung bzw. auf der mit der berührungssensitiven Einrichtung in Wirkkontakt stehenden bildgebenden Einheit bereitstellt. Derart bereitgestellte Orientierungssignale vermeiden Kontrollblicke und tragen dadurch zu einer Entlastung des jeweiligen Nutzers bei.

In einer weiteren möglichen Ausgestaltung des erfindungsgemäßen Verfahrens ist vorgesehen, dass die haptischen und/oder akustischen Muster durch Vibration realisiert werden. Die erwähnte Rückmeldung über eine erfolgte Berührung der berührungssensitiven Einrichtung durch den jeweiligen Nutzer sollte schnell und eindeutig erfolgen. Daher ist vorgesehen, diese Rückmeldung durch ein Vibrationsmuster darzubieten. Vibrationen sind haptische Muster mit hoher Frequenz, welche sich gut eignen, um vielfältige Varianten zu erzeugen und dadurch eine Unterscheidungs- bzw. Identifikationsleistung des Nutzers zwischen den verschiedenen Varianten bzw. der damit verbundenen Informationen ermöglichen. In einer weiteren möglichen Ausgestaltung des erfindungsgemäßen Verfahrens ist vorgesehen, dass die haptischen und/oder akustischen Muster an jeder Position der mindestens einen berührungssensitiven Einrichtung und in beliebiger räumlicher Ausdehnung realisiert werden können.

Zur Übermittlung von Information an den Nutzer kann nicht nur die Ausgestaltung des jeweiligen haptischen und/oder akustischen Musters verwendet werden, sondern auch dessen Position. Bei einer Blindbedienung des technischen Systems, insbesondere der berührungssensitiven Einrichtung, erscheint es sinnvoll, auch Positionsinformationen der durch die Berührung angesprochenen Stelle der bildgebenden Einheit an den jeweiligen Nutzer zu übermitteln. Dazu ist vorgesehen, die Position auf der bildgebenden Einheit eines für den jeweiligen Nutzer relevanten Objekts durch haptische und/oder akustische Muster für den Nutzer wahrnehmbar zu gestalten, bspw. durch ein echoartiges Knacken, ein graduell zunehmendes Vibrieren oder ähnliches, sobald der Finger des jeweiligen Nutzers entweder direkt auf der berührungssensitiven Einrichtung, falls diese in die bildgebende Einheit integriert ist, in die Nähe des relevanten Objekts gelangt oder andernfalls bei Bewegung auf der von der bildgebenden Einheit separat angeordneten berührungsempfindlichen Einrichtung bewirkt, dass ein auf dem Bildschirm sich bewegender Cursor in die Nähe des relevanten Objekts kommt. Dabei kann sich der Gradient der Signalintensität, welcher den jeweiligen Nutzer zu dem relevanten Objekt führt, sowohl innerhalb eines beschränkten Radius um das relevante Objekt selbst als auch über die gesamte bildgebende Einheit erstrecken.

In einer weiteren möglichen Ausgestaltung des erfindungsgemäßen Verfahrens ist vorgesehen, dass die haptischen Muster durch mindestens einen Aktuator übermittelt werden.

Die Übermittlung der haptischen Informationen an den Nutzer kann durch beliebige Vorrichtungen generiert werden, wie bspw. durch Aktuatoren, Vibratoren, mechanische- und/oder elektronische Mittel.

Ferner betrifft die vorliegende Erfindung ein System zur Übermittlung einer bedienungsspezifischen Rückmeldung an einen Nutzer bei Bedienung einer berührungssensitiven Einrichtung. Das erfindungsgemäße System dient insbesondere dazu, das erfindungsgemäße Verfahren auszuführen.

In Ausgestaltung des erfindungsgemäßen Systems ist vorgesehen, dass das System zur Übermittlung einer bedienungsspezifischen Rückmeldung an einen Nutzer die Merkmale des unabhängigen Patentanspruchs 7 umfasst. Um das voranstehend beschriebene erfindungsgemäße Verfahren sinnvoll umsetzen zu können, ist erfindungsgemäß ein System vorgesehen, welches die zur Ausführung des erfindungsgemäßen Verfahrens nötigen Voraussetzungen schafft.

In einer weiteren möglichen Ausführungsform des erfindungsgemäßen Systems ist vorgesehen, dass das System ferner mindestens einen Aktuator, welcher dazu konfiguriert ist, ein haptisches Muster an den Nutzer zu übermitteln, und eine Vorrichtung zum Ausführen von Steuerungs- und/oder Koordinationsberechnungen in Verbindung mit mindestens einer bildgebenden Einheit umfasst. Das bedeutet, dass das erfindungsgemäße System zur visuellen Darstellung von durch das erfindungsgemäße System wiederzugebenden Informationen in Wirkkontakt mit der bildgebenden Einheit steht.

Es ist vorgesehen, dass bei einer Interaktion des Nutzers mit dem erfindungsgemäßen System, ein der jeweiligen an den Nutzer zu übermittelnden Information entsprechendes haptisches und/oder akustisches Muster erzeugt wird. Durch Variationen von Stärke, Dauer und Frequenz des haptischen und/oder akustischen Musters werden dem Nutzer bedienungsspezifische Rückmeldungen dargeboten, welche durch den Nutzer identifiziert und zu einer Rekonstruktion der Ereignisse auf der bildgebenden Einheit in einem mentalen Modell verwendet werden können. Erfindungsgemäß wird dadurch eine Rekonstruktion von auf der bildgebenden Einheit dargestellten Szenen auch ohne visuellen Informationsaustausch möglich.

Die Übermittlung der haptischen Informationen an den Nutzer kann durch beliebige Vorrichtungen generiert werden, wie bspw. durch Aktuatoren, Vibratoren, mechanische und/oder elektronische Mittel. Die Übermittlung der akustischen Information erfolgt dabei meist durch einen Lautsprecher oder Tonerzeuger.

Gemäß einem Ausführungsbeispiel, das nicht Bestandteil der Erfindung ist, umfasst das System die mindestens eine bildgebende Einheit, wobei die mindestens eine berührungssensitive Einrichtung als integraler Bestandteil der mindestens einen bildgebenden Einheit ausgestaltet ist.

Ferner ist insbesondere für die Ausführung des erfindungsgemäßen Verfahrens in einem Fahrzeug, eine Vorrichtung zur Ausführung ggf. notwendiger Steuerungs- und/oder Koordinationsberechnungen vorgesehen. Diese kann insbesondere mindestens einen Prozessor oder ein anderes Rechenelement umfassen, wobei das Rechenelement oder der Prozessor auch Teil einer bereits existierenden und nicht zwangsläufig nur im Kontext des erfindungsgemäßen Systems einzusetzenden Vorrichtung sein kann.

In einer weiteren möglichen Ausgestaltung des erfindungsgemäßen Systems ist vorgesehen, dass das System zusätzlich zu der mindestens einen berührungssensitiven Einrichtung die mindestens eine bildgebende Einheit umfasst, wobei erfindungsgemäß die mindestens eine berührungssensitive Einrichtung in räumlicher Distanz zu der mindestens einen bildgebenden Einheit angeordnet ist und mit der mindestens einen bildgebenden Einheit in Wirkkontakt steht.

Eine Kombination von haptischer und visueller Information kann dem Nutzer einen deutlichen Mehrwert bei einer Übermittlung von Informationen bieten als dies unter Verwendung der jeweiligen Kommunikationskanäle in getrennter Form der Fall ist. Das bedeutet, dass die Informationskanäle Haptik und Optik sich gegenseitig ergänzen können und/oder ein Kanal den anderen sogar teilweise ersetzen kann. In der vorliegenden Erfindung sind haptische Informationen derart darzubieten, dass diese den Nutzer entlasten und den visuellen Kanal teilweise ersetzen, so dass der Nutzer nicht gezwungen ist, dauerhaft Blickkontakt mit der mindestens einen bildgebenden Einheit zu halten.

Wie voranstehend bereits beschrieben, umfasst das erfindungsgemäße System gemäß einer Ausgestaltung die mindestens eine berührungssensitive Einrichtung und die mindestens eine bildgebende Einheit. Gemäß einem Ausführungsbeispiel, das nicht Bestandteil der Erfindung ist, können beide Teile dabei quasi zu einer Einheit fusioniert sein und sich bspw. derart überlagern, dass eine Art "Touchscreen" resultiert. Erfindungsgemäß sind die beiden Teile jedoch räumlich getrennt voneinander angeordnet. Insbesondere für die Ausführung des erfindungsgemäßen Verfahrens in einem Fahrzeug kann es sinnvoll erscheinen, die berührungssensitive Einrichtung in räumlicher Distanz zu der bildgebenden Einheit vorzusehen, da dies ergonomische Vorteile, wie bspw. leichtere Bedienbarkeit, komfortableres Bedienen, etc. mit sich bringt.

Insbesondere eine Ausgestaltung der berührungssensitiven Einrichtung in transparenter Form ermöglicht eine Fusion von visueller und haptischer Information zu einem Gesamteindruck, welcher zu einer Entlastung des Nutzers führt. Insbesondere ein genaues Kontrollieren von Gesten sowie Blicke zu einer Überprüfung des Systems werden durch eine haptische Rückmeldung überflüssig.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den durch die Patentansprüche festgelegten Rahmen der vorliegenden Erfindung zu verlassen.

Die Erfindung ist anhand von einer Ausführungsform in dem Ausführungsbeispiel und der Zeichnung schematisch dargestellt und wird im Folgenden schematisch und ausführlich beschrieben.
Figur 1 zeigt eine Veränderung einer Rückmeldung von einem nicht durch die Patentansprüche gedeckten Ausführungsbeispiel des Systems bei Ansprechen unterschiedlicher Positionen auf einer Landschaftsansicht, die auf einer bildgebenden Einheit dargestellt ist, mittels einer berührungsempfindlichen Einrichtung als Teil des Systems.
Figur 2 zeigt einen ersten Anwendungsfall einer Ausführungsform des erfindungsgemäßen Systems, bei dem eine Navigation innerhalb einer Liste vorgenommen wird.
Figur 3 zeigt einen anderen Anwendungsfall der Ausführungsform des erfindungsgemäßen Systems aus Figur 2, bei dem eine Navigation innerhalb einer Navigationskarte vorgenommen wird.

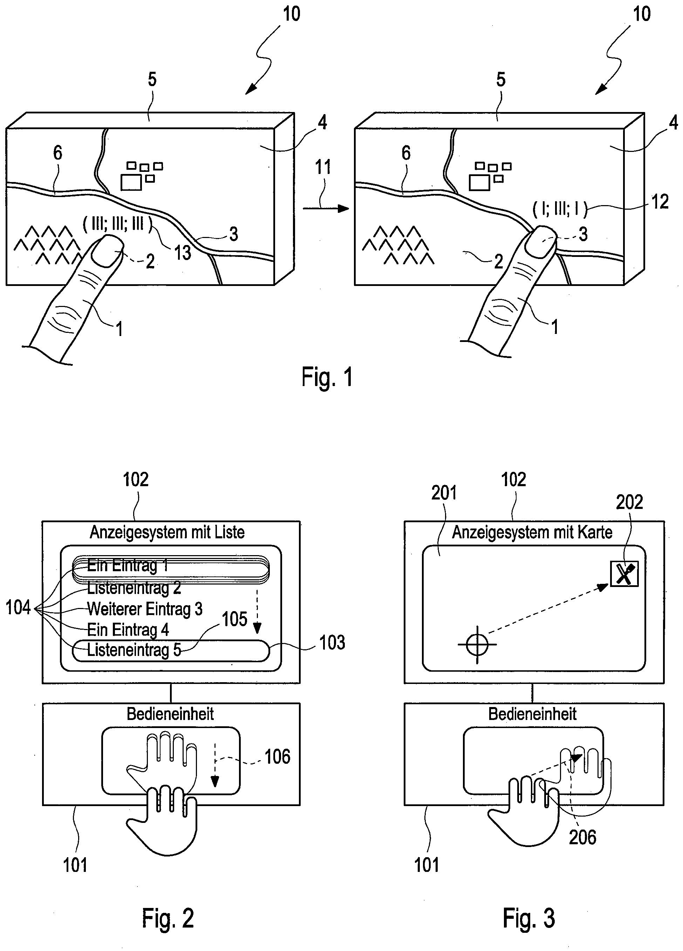

Figur 1 zeigt eine nicht durch die Patentansprüche gedeckte Ausführungsform des Systems mit einer bildgebenden Einheit 5 und einer berührungssensitiven Einrichtung 4, wobei hier beide zu einem berührungssensitiven Bildschirm 10 fusioniert sind.

In dem in Figur 1 dargestellten Ausführungsbeispiel wird ein Übergang einer Position eines Fingers 1 eines Nutzers von einem ersten Berührungsort 2 zu einem gewünschten Zielpunkt 3 auf der berührungssensitiven Einrichtung 4, welche Teil der hier beschriebenen Ausführungsform des Systems ist, dargestellt. Da in diesem Ausführungsbeispiel die berührungssensitive Einrichtung 4 transparent ausgeführt und in die bildgebende Einheit 5 integriert ist, erscheinen die Bewegungen des Nutzers auf der berührungssensitiven Einrichtung 4 assoziiert mit Veränderungen auf einer Darstellung auf der bildgebenden Einheit 5. Dabei zeigt die bildgebende Einheit 5 eine für eine Navigation typische Landschaftsansicht mit einer Autobahn, die zugleich den Zielpunkt 3 des Nutzers darstellt.

Um den Zielpunkt 3 auch ohne visuelle Aufmerksamkeit zu orten, verwendet der Nutzer seinen Finger 1 und setzt diesen an dem ersten Berührungspunkt 2 auf der berührungssensitiven Einrichtung 4 auf. Als Rückmeldung auf die Berührung des Nutzers, gibt das erfindungsgemäße System eine definierte haptische Rückmeldung in Form einer Vibration des Musters 13 (III; III; III) aus. Diese Rückmeldung signalisiert dem Nutzer in Kenntnis einer Vielzahl von jeweils verschiedenen Stellen zugeordneten Mustern, dass sich sein Finger 1 noch nicht am gewünschten Zielpunkt 3 befindet. Durch Abtasten der berührungssensitiven Einrichtung 4, wie durch Pfeil 11 angedeutet, berührt der Finger 1 des Nutzers letztlich den Zielpunkt 3, nämlich die Position einer auf der Landschaftsansicht enthaltenen Autobahn 6, welche mit einer definierten haptischen Rückmeldung in Form einer Vibration des Musters 12 (I; III; I) an den Nutzer rückgemeldet wird. Durch die erfolgte Änderung der haptischen Rückmeldung ist es dem Nutzer möglich, auch ohne visuelle Kontrolle, den Zielpunkt 3 von dem ersten Berührungsort 2 zu unterscheiden und ggf. weitere Eingaben zu vollziehen.

Bei dem in Figur 2 dargestellten ersten Anwendungsfall einer Ausführungsform des erfindungsgemäßen Systems bedient der Nutzer eine berührungssensitive Einrichtung 101 in räumlicher Distanz zu einer bildgebenden Einheit 102. Durch einfaches Tippen auf die berührungssensitive Einrichtung 101 wird das erfindungsgemäße System aktiviert, welches die Aktivierung mit einem definierten Vibrationsmuster an den Nutzer rückmeldet. Durch Verschieben einer Kontaktfläche des Nutzers mit der berührungssensitive Einrichtung 101 nach unten, wie durch Pfeil 106 angedeutet, wandert auch ein korrespondierender auf der bildgebenden Einheit 102 dargestellter Auswahlrahmen 103 in einer Liste auf der bildgebenden Einheit 102, wie durch einen entsprechenden Pfeil angedeutet, nach unten. Jedes Mal, wenn ein Listenelement 104 ausgewählt wird, erfolgt eine haptische und/oder akustische Rückmeldung an den Nutzer in Form eines charakteristischen haptischen und/oder akustischen Musters. Um dem Nutzer eine Orientierung innerhalb der Liste zu ermöglichen, verändert sich die bspw. akustische Komponente der Rückmeldung in Abhängigkeit einer ausgewählten Position des Rahmens 103 in der Liste. So ist bspw. die akustische Komponente zu Beginn der Liste in einem eher langsamen Rhythmus gehalten, welcher mit fortschreitender Position gegen Ende der Liste an Geschwindigkeit zunimmt. Wird ein gewünschtes Listenelement 105 durch doppeltes Tippen vom Nutzer ausgewählt, so wird die jeweilige Bezeichnung von dem erfindungsgemäßen System bspw. akustisch wiedergegeben und kann durch einfaches Tippen auf die berührungssensitive Einrichtung 101 vom Nutzer bestätigt werden.

In Figur 3 wird ein weiterer Anwendungsfall der Ausführungsform des erfindungsgemäßen Systems aus Figur 2 dargestellt, welcher auf einer digitalen Navigationskarte 201 stattfindet. Die digitale Navigationskarte 201 wird auf der bildgebenden Einheit 102 dargestellt, während eine Eingabe des Nutzers sowie eine darauffolgende Rückmeldung in Form haptischer und/oder akustischer Signale auf der berührungssensitiven Einrichtung 101 stattfindet. Durch einfaches Tippen auf die berührungssensitive Einrichtung 101 wir das erfindungsgemäße System aktiviert, welches die Aktivierung bspw. mit einem definierten Vibrationsmuster an den Nutzer rückmeldet. Durch Verschieben der Kontaktfläche des Nutzers mit der berührungssensitiven Einrichtung 101 nach rechts, wie durch Pfeil 206 angedeutet, identifiziert der Nutzer einen Zielort in Form eines Restaurants 202, welches durch ein charakteristisches Muster in Form haptischer und/oder akustischer Signale an den Nutzer rückgemeldet wird. Der Nutzer bestätigt die Auswahl durch einfaches Tippen auf die berührungssensitive Einrichtung 101 und aktiviert dadurch eine Routenführung zum Restaurant 202.

Im nachfolgend beschriebenen Szenario ist ebenfalls der Einsatz einer weiteren Ausführungsform des erfindungsgemäßen Systems denkbar.

Ein Fahrer eines Kraftwagens erfährt, während er unterwegs zu einem Kundengespräch ist, von einer Änderung eines vereinbarten Treffpunktes, nämlich nunmehr einem Restaurant am Fernsehturm. Noch während der Fahrt aktiviert der Fahrer eine Ausführungsform des erfindungsgemäßen Systems, indem er eine dem System zugehörige berührungssensitive Einrichtung in dem jeweiligen Kraftwagen berührt und das erfindungsgemäße System dieses mit einem definierten, dem Fahrer wohlbekannten Vibrationsmuster durch einen Aktuator rückmeldet. Ein weiteres Signal aus einer Kombination von haptischen und/oder akustischen Mustern weist den Fahrer darauf hin, dass das System nun bereit ist, eine Routenänderung vorzunehmen.

Durch Verfolgen eines charakteristischen, haptischen Signals, das dem Fahrer ebenfalls geläufig ist und das in seiner Intensität in einer definierten Richtung zunimmt, findet der Fahrer durch seinen Zeigefinger den alten Zielort, welcher von ihm durch Ausüben eines sanften, zweifach wiederholten Drucks auf die berührungssensitive Einrichtung an der identifizierten Stelle ausgewählt wird.

Daraufhin wird die Auswahl von dem erfindungsgemäßen System durch einen charakteristischen Ton an den Fahrer rückgemeldet. Das System ist jetzt bereit, den Zielort neu zu setzen. Durch Streichbewegungen über die berührungssensitive Einrichtung nimmt der Fahrer einen deutlich hervorgehobenen Teil, welcher in einer charakteristischen Frequenz vibriert, wahr und erkennt dadurch die Autobahn, auf der er sich befindet.

Durch Verfolgen des haptischen Signals der Autobahn mit dem Zeigefinger, stößt der Fahrer auf einen Punkt, an dem sich die Frequenz der Vibration ändert. An diesem Punkt besteht eine Möglichkeit zur Abfahrt zu einem Punkt von Interesse (PVI). Durch Auswahl des PVls durch leichtes Antippen durch den Fahrer nennt das erfindungsgemäße System die Bezeichnung des PVIs, bspw. Fernsehturm. Durch doppeltes Tippen kann der Fahrer den PVI als neues Ziel festlegen und der akustischen Routenführung folgen.

## Patentansprüche

1. Verfahren zur Übermittlung einer bedienungsspezifischen Rückmeldung an einen Nutzer bei Bedienung mindestens einer berührungssensitiven Einrichtung (101), wobei die Rückmeldung mittels haptischer und/oder akustischer Muster (12, 13) übermittelt wird,
wobei die haptischen und/oder akustischen Muster (12, 13) in Abhängigkeit der an den Nutzer zu übermittelnden bedienungsspezifischen Rückmeldung in Stärke, Dauer und Frequenz variiert werden,
wobei durch Bedienung der mindestens einen berührungssensitiven Einrichtung (101) mindestens eine von der mindestens einen berührungssensitiven Einrichtung (101) separat angeordnete bildgebende Einheit (102) bedient wird und durch Variation in Stärke, Dauer und Frequenz der haptischen und/oder akustischen Muster (12, 13), bei Bedienung der mindestens einen berührungssensitiven Einrichtung (101) angesprochene je mit einer Information verbundene und auf der mindestens einen bildgebenden Einheit (102) dargestellte Stellen an den Nutzer identifizier- und unterscheidbar rückgemeldet werden, **dadurch gekennzeichnet, dass** eine Position auf der mindestens einen bildgebenden Einheit (102) eines bekannten, für den Nutzer relevanten Objekts durch ein in seiner Intensität graduell zunehmendes Vibrieren der mindestens einen berührungssensitiven Einrichtung (101) für den Nutzer wahrnehmbar gestaltet wird, sobald ein Finger (1) des Nutzers bei Bewegung auf der mindestens einen berührungssensitiven Einrichtung (101) bewirkt, dass ein sich auf der mindestens einen bildgebenden Einheit (102) bewegender Cursor in die Nähe des relevanten Objekts kommt, und
wobei sich der Gradient der Signalintensität, welcher den Nutzer zu dem relevanten Objekt führt, innerhalb eines beschränkten Radius um das relevante Objekt erstreckt.

2. Verfahren nach Anspruch 1, wobei die bei Bedienung der mindestens einen berührungssensitiven Einrichtung (101) angesprochenen, je mit einer Information verbundenen und auf der mindestens einen bildgebenden Einheit (102) dargestellten Stellen ausgewählt sind aus der Gruppe bestehend aus Listenelementen einer auf der mindestens einen bildgebenden Einheit (102) gezeigten Liste, Points of Interest in einer auf der mindestens einen bildgebenden Einheit (102) dargestellten Navigationskarte, Straßen und/oder Geländemerkmale eines auf der mindestens einen bildgebenden Einheit (102) dargestellten Geländemodells.

3. Verfahren nach einem der Ansprüche 1 oder 2, wobei durch Variation und Kombination von Stärke, Dauer und Frequenz der haptischen und/oder akustischen Muster (12, 13), eine Vielzahl an von dem jeweiligen Nutzer leicht zu unterscheidenden Mustern bereitgestellt wird, welche einer Vielzahl an auf der mindestens einen bildgebenden Einheit (102) dargestellten, je mit einer Information verbundenen und auf der mindestens einen bildgebenden Einheit (102) dargestellten Stellen zugeordnet werden.

4. Verfahren nach einem der voranstehenden Ansprüche, wobei die haptischen und/oder akustischen Muster (12, 13) durch Vibration realisiert werden.

5. Verfahren nach einem der voranstehenden Ansprüche, wobei die haptischen und/oder akustischen Muster (12, 13) an jeder Position der mindestens einen berührungssensitiven Einrichtung (101) und in beliebiger räumlicher Ausdehnung realisiert werden.

6. Verfahren nach einem der voranstehenden Ansprüche, wobei die haptischen und/oder akustischen Muster (12, 13) durch mindestens einen Aktuator übermittelt werden.

7. System zur Übermittlung einer bedienungsspezifischen Rückmeldung an einen Nutzer bei Bedienung mindestens einer berührungssensitiven Einrichtung (101),
wobei das System zur Übermittlung der bedienungsspezifischen Rückmeldung an den Nutzer die mindestens eine berührungssensitive Einrichtung (101) umfasst, welche zur Ausgabe von haptischen und/oder akustischen Signalen (12, 13) geeignet und zu verwenden ist, wobei bei Bedienung der mindestens einen berührungssensitiven Einrichtung (101) durch den Nutzer, von der mindestens einen berührungssensitiven Einrichtung (101) mindestens ein haptisches und/oder akustisches Muster (12, 13) generiert und an den Nutzer übermittelt wird,
wobei das mindestens eine haptische und/oder akustische Muster (12, 13) in Abhängigkeit einer an den Nutzer zu übermittelnden bedienungsspezifischen Rückmeldung in Stärke, Dauer und Frequenz zu variieren ist, und wobei das System dazu konfiguriert ist, durch Bedienung der mindestens einen berührungssensitiven Einrichtung (101) mindestens eine bildgebende Einheit (102) zu bedienen und durch Variation in Stärke, Dauer und Frequenz der haptischen und/oder akustischen Muster (12, 13) bei Bedienung der mindestens einen berührungssensitiven Einrichtung (101) angesprochene, je mit einer Information verbundene und auf der mindestens einen bildgebenden Einheit (102) dargestellte Stellen an den Nutzer identifizier- und unterscheidbar rückzumelden,
wobei die mindestens eine berührungssensitive Einrichtung (101) in räumlicher Distanz zu der mindestens einen bildgebenden Einheit (102) angeordnet ist und mit der mindestens einen bildgebenden Einheit (102) in Wirkkontakt steht, **dadurch gekennzeichnet, dass**
eine Position auf der mindestens einen bildgebenden Einheit (102) eines bekannten, für den Nutzer relevanten Objekts durch ein in seiner Intensität graduell zunehmendes Vibrieren der mindestens einen berührungssensitiven Einrichtung (101) für den Nutzer wahrnehmbar gestaltet wird, sobald ein Finger (1) des Nutzers bei Bewegung auf der mindestens einen berührungssensitiven Einrichtung (101) bewirkt, dass ein sich auf der mindestens einen bildgebenden Einheit (102) bewegender Cursor in die Nähe des relevanten Objekts kommt, und wobei sich der Gradient der Signalintensität, welcher den Nutzer zu dem relevanten Objekt führt, innerhalb eines beschränkten Radius um das relevante Objekt erstreckt.

8. System nach Anspruch 7, wobei das System weiter mindestens einen Aktuator, welcher dazu konfiguriert ist, ein haptisches Muster (12, 13) an den Nutzer zu übermitteln, und eine Vorrichtung zum Ausführen von Steuerungs- und/oder Koordinationsberechnungen in Verbindung mit der mindestens einen bildgebenden Einheit (102) umfasst.

## Claims

1. Method for transmitting an operation-specific feedback to a user upon operation of at least one touch-sensitive device (101),
wherein the feedback is transmitted by means of haptic and/or acoustic patterns (12, 13),
wherein the haptic and/or acoustic patterns (12,13) are varied in the strength, duration and frequency depending on the operation-specific feedback to be transmitted to the user,
wherein upon operation of the at least one touch-sensitive device (101) at least one image forming unit (102) disposed separately from the at least one touch-sensitive device (101) is operated and by means of variation in the strength, duration and frequency of the haptic and/or acoustic patterns (12, 13) points contacted upon operation of the at least one touch-sensitive device (101), respectively connected with one piece of information and represented on the at least one image forming unit (102) are fed back to the user such as to be able to be identified and differentiated, **characterised in that** a position on the at least one image forming unit (102) of an object known and relevant for the user is made perceptible for the user by means of a vibration, gradually increasing in its intensity, of the at least one touch-sensitive device (101), as soon as a finger (1) of the user, upon being moved on the at least one touch-sensitive device (101) causes a cursor, moving on the at least one image forming unit (102) to come near to the relevant object,
and
wherein the gradient of the signal intensity which guides the user to the relevant object extends within a limited radius around the relevant object.

2. Method according to claim 1, wherein the points contacted upon operation of the at least one touch-sensitive device (101), respectively connected with one piece of information and represented on the at least one image forming unit (102), are selected from the group composed of list elements of a list displayed on the at least one image forming unit (102), points of interest in a navigational map represented on the at least one image forming unit (102), roads and/or features of the terrain of a terrain model represented on the at least one image forming unit (102).

3. Method according to any of claims 1 or 2, wherein by means of variation and combination of strength, duration and frequency of the haptic and/or acoustic patterns (12, 13), a plurality of patterns is provided which can be easily differentiated by the respective user, which are assigned to a plurality of points represented on the at least one image forming unit (102), respectively connected with one piece of information and represented on the at least one image forming unit (102).

4. Method according to any of the preceding claims, wherein the haptic and/or acoustic patterns (12, 13) are realised by vibration.

5. Method according to any of the preceding claims, wherein the haptic and/or acoustic patterns (12, 13) are realised on every position of the at least one touch-sensitive device (101) and in any spatial extension.

6. Method according to any of the preceding claims, wherein the haptic and/or acoustic patterns (12, 13) are transmitted by at least one actuator.

7. System for transmitting an operation-specific feedback to the user upon operation of at least one touch-sensitive device (101),
wherein the system for transmitting the operation-specific feedback to the user comprises the at least one touch-sensitive device (101), which is suitable and to be used for the output of haptic and/or acoustic signals (12, 13), wherein upon operation of the at least one touch-sensitive device (101) on the part of the user, from the at least one touch-sensitive device (101) at least one haptic and/or acoustic pattern (12, 13) is generated and transmitted to the user,
wherein the at least one haptic and/or acoustic pattern (12, 13) is to be varied in strength, duration and frequency depending on an operation-specific feedback to be transmitted to the user, and wherein the system is configured, by means of operating the at least one touch-sensitive device (101) to operate at least one image forming unit (102) and by means of variation in strength, duration and frequency of the haptic and/or acoustic patterns (12, 13), points contacted upon operation of the at least one touch-sensitive device (101), respectively connected with one piece of information and represented on the at least one image forming unit (102) are to be fed back to the user such as to be able to be identified and differentiated,
wherein the at least one touch-sensitive device (101) is disposed at a spatial distance to the at least one image forming unit (102) and is in operative contact with the at least one image forming unit (102), **characterised in that** a position on the at least one image forming unit (102) of an object which is known and relevant for the user is made perceivable for the user by means of a vibration, gradually increasing in its intensity, of the at least one touch-sensitive device (101), as soon as a finger (1) of the user, upon being moved on the at least one touch-sensitive device (101) causes a cursor, moving on the at least one image forming unit (102), to come near to the relevant object, and wherein the gradient of the signal intensity which guides the user to the relevant object extends within a limited radius around the relevant object.

8. System according to claim 7, wherein the system furthermore comprises at least one actuator which is configured to transmit a haptic pattern (12, 13) to the user, and a device for carrying out control and/or coordination calculations in connection with the at least one image forming unit (102).

## Revendications

1. Procédé pour transmettre des informations de retour spécifiques à la commande à un utilisateur lors de la commande d'au moins un dispositif sensible à l'effleurement (101),
dans lequel les informations de retour sont transmises au moyen de modèles haptiques et/ou acoustiques (12, 13),
dans lequel les modèles haptiques et/ou acoustiques (12, 13) sont variables en force, durée et fréquence en fonction des informations de retour spécifiques à la commande à transmettre à l'utilisateur,
dans lequel au moins une unité d'imagerie (102) agencée séparément de l'au moins un dispositif sensible à l'effleurement (101) est commandée par commande de l'au moins un dispositif sensible à l'effleurement (101) et des points visés lors de la commande de l'au moins un dispositif sensible à l'effleurement (101), reliés respectivement à une information et représentés sur l'au moins une unité d'imagerie (102) sont retournés de manière identifiable et différenciable à l'utilisateur par variation de force, de durée et de fréquence des modèles haptiques et/ou acoustiques (12, 13), **caractérisé en ce qu'**une position sur l'au moins une unité d'imagerie (102) d'un objet connu, pertinent pour l'utilisateur, est configurée de manière perceptible pour l'utilisateur par une vibration à intensité augmentant graduellement de l'au moins un dispositif sensible à l'effleurement (101), dès qu'un doigt (1) de l'utilisateur lors du déplacement sur l'au moins un dispositif sensible à l'effleurement (101) entraîne qu'un curseur se déplaçant sur l'au moins une unité d'imagerie (102) arrive à proximité de l'objet pertinent, et
dans lequel le gradient de l'intensité de signal, lequel conduit l'utilisateur vers l'objet pertinent, s'étend à l'intérieur d'un rayon limité autour de l'objet pertinent.

2. Procédé selon la revendication 1, dans lequel les points visés lors de la commande de l'au moins un dispositif sensible à l'effleurement (101), reliés respectivement à une information et représentés sur l'au moins une unité d'imagerie (102) sont sélectionnés à partir du groupe constitué par des éléments de liste d'une liste affichée sur l'au moins une unité d'imagerie (102), des points d'intérêt dans une carte de navigation représentée sur l'au moins une unité d'imagerie (102), des rues et/ou des caractéristiques de terrain d'un modèle de terrain représenté sur l'au moins une unité d'imagerie (102).

3. Procédé selon l'une quelconque des revendications 1 ou 2, dans lequel par variation et combinaison de la force, de la durée et de la fréquence des modèles haptiques et/ou acoustiques (12, 13), une pluralité de motifs faciles à différencier par l'utilisateur respectif est mise à disposition, lesquels sont associés à une pluralité de points représentés sur l'au moins une unité d'imagerie (102), reliés respectivement à une information et représentés sur l'au moins une unité d'imagerie (102).

4. Procédé selon l'une quelconque des revendications précédentes, dans lequel les modèles haptiques et/ou acoustiques (12, 13) sont réalisés par vibration.

5. Procédé selon l'une quelconque des revendications précédentes, dans lequel les modèles haptiques et/ou acoustiques (12, 13) sont réalisés à chaque position de l'au moins un dispositif sensible à l'effleurement (101) et dans une extension spatiale quelconque.

6. Procédé selon l'une quelconque des revendications précédentes, dans lequel les modèles haptiques et/ou acoustiques (12, 13) sont transmis par au moins un actionneur.

7. Système pour transmettre des informations de retour spécifiques à la commande à un utilisateur lors de la commande d'au moins un dispositif sensible à l'effleurement (101),
dans lequel le système pour transmettre des informations de retour spécifiques à la commande à l'utilisateur comprend l'au moins un dispositif sensible à l'effleurement (101), lequel est adapté et utilisé pour l'émission de signaux haptiques et/ou acoustiques (12, 13), dans lequel lors de la commande de l'au moins un dispositif sensible à l'effleurement (101) par l'utilisateur, au moins un modèle haptique et/ou acoustique (12, 13) est généré par l'au moins un dispositif sensible à l'effleurement (101) et est transmis à l'utilisateur,
dans lequel l'au moins un modèle haptique et/ou acoustique (12, 13) doit être variable en force, durée et fréquence en fonction des informations de retour spécifiques à la commande à transmettre à l'utilisateur, et dans lequel le système est configuré pour commander au moins une unité d'imagerie (102) par commande de l'au moins un dispositif sensible à l'effleurement (101) et retourner des points visés lors de la commande de l'au moins un dispositif sensible à l'effleurement (101), reliés respectivement à une information et représentés sur l'au moins une unité d'imagerie (102) de manière identifiable et différenciable à l'utilisateur par variation de force, de durée et de fréquence des modèles haptiques et/ou acoustiques (12, 13),
dans lequel l'au moins un dispositif sensible à l'effleurement (101) est agencé à distance spatiale de l'au moins une unité d'imagerie (102) et est en contact actif avec l'au moins une unité d'imagerie (102), **caractérisé en ce que**
une position sur l'au moins une unité d'imagerie (102) d'un objet connu, pertinent pour l'utilisateur, est configurée de manière perceptible pour l'utilisateur par une vibration à intensité augmentant graduellement de l'au moins un dispositif sensible à l'effleurement (101), dès qu'un doigt (1) de l'utilisateur lors du déplacement sur l'au moins un dispositif sensible à l'effleurement (101) entraîne qu'un curseur se déplaçant sur l'au moins une unité d'imagerie (102) arrive à proximité de l'objet pertinent, et dans lequel le gradient de l'intensité de signal, lequel conduit l'utilisateur vers l'objet pertinent, s'étend à l'intérieur d'un rayon limité autour de l'objet pertinent.

8. Système selon la revendication 7, dans lequel le système comprend en outre au moins un actionneur, lequel est configuré pour transmettre un modèle haptique (12, 13) à l'utilisateur, et un dispositif de réalisation de calculs de commande et/ou de coordination en relation avec l'au moins une unité d'imagerie (102).
